**Europäisches Patentamt**

**European Patent Office**

**Office européen des brevets**

(19)

(11) Publication number: **0 105 466**

**A1**

(12)

# EUROPEAN PATENT APPLICATION

(21) Application number: **83109698.7**

(22) Date of filing: **28.09.83**

(51) Int. Cl.³: **F 16 B 12/44**
**F 16 B 7/00**

(30) Priority: **30.09.82 IT 2305982 U**
**30.12.82 IT 2382782 U**

(43) Date of publication of application:
**18.04.84 Bulletin 84/16**

(84) Designated Contracting States:
**AT BE CH DE FR GB IT LI LU NL SE** .

(71) Applicant: **PORRO & PORRO S.r.l.**
**Via Nobili Calvi 39**
**I-22060 Montesolaro di Carimate Province of Como(IT)**

(72) Inventor: **Porro, Paolo**
**39, Via Nobili Calvi**
**I-22060 Montesolaro di Carimate (Como)(IT)**

(74) Representative: **Riccardi, Sergio**
**Riccardi & Co. Via Macedonio Melloni, 32**
**I-20129 Milano(IT)**

(54) Connection device for furniture structural elements.

(57) A connection device for furniture elements consists of a single connecting unit (1) to be fixed to the legs or columns (3) of the pieces of furniture and has one or more seats (4) on which the ends of the furniture structural elements (10) are applied, directly or through intermediate support members (6), eliminating the requirement of welding the elements to one another.

Fig. 2

EP 0 105 466 A1

Croydon Printing Company Ltd.

0105466

"CONNECTION DEVICE FOR FURNITURE STRUCTURAL ELEMENTS"

The present invention relates to a device designed for carrying out the connection of metal structural elements of furniture.

It is known that in the manufacture of furniture with metal structure, such as chairs, tables, beds, trolleys and other furniture having a structure consisting of tubes or profiles made of metal such as brass, steel, iron and the like, the connection of the various structural elements is effected at least partially by welding, which is a polluting process, requiring skilled labour that is more and more difficult to be found, leaving clearly visible traces of it on the processed workpiece and not allowing any detachment of the welded parts, so that disassembling and transportation of metal furniture is a difficult task.

These disadvantages are removed by the connection device of the present invention, allowing to connect without any welding metal structural elements of furniture, moreover leaving open the possibility of disassembling the piece of furniture at any desired time.

The connection device according to the present invention, consisting of a single connecting unit to be fixed to the legs or columns of the pieces of furniture of the above mentioned kind, is characterized by the fact of comprising one or more seats on which the ends of the furniture structural elements are applied, directly or through intermediate support members, without needing any welding.

In a first embodiment, the connection device according to the present invention consists of a connecting unit to be fixed to the furniture legs or columns by a tie-rod, having one or more seats for threading support members, on which the ends of the structural elements are in turn threaded, such as the crosspieces and the longitudinal members of a bed frame, a bed headboard or foot, the bars forming the frame of a chair or table and so on, all said applications without any welding.

Such a solution provides that the support members are blocked in the corresponding seats of the connecting unit by a screw, whose stem is screwed in a corresponding threaded bore at the seat bottom, and though it is a functional solution well suited for this purpose, there is some practical difficulty in case of connections of small diameter, as it is not very easy to tighten said screw in the seat bottom, which is an operation always advisable to be eliminated.

In a second simplified embodiment of the invention, this slight difficulty is removed, providing a connection device for furniture tubular elements, in which the connecting arms for the tubular elements are integral, so that the only operation to be effected during assembly is to thread and lock the tubular elements on the connecting arms.

These and other advantages, objects and features of the connection device according to the present invention will become apparent from the following detailed description, given as a non limiting example only, of both above mentioned embodiments, reference being had to the accompanying illustrative drawings, in which:

Fig. 1 is an elevational and partially sectional view of the first embodiment of the device of the invention;

Fig. 2 is a perspective view of the device of Fig. 1, showing the application of structural tubular elements to the device; and

Fig. 3 is a perspective view of the simplified embodiment of the device of the invention.

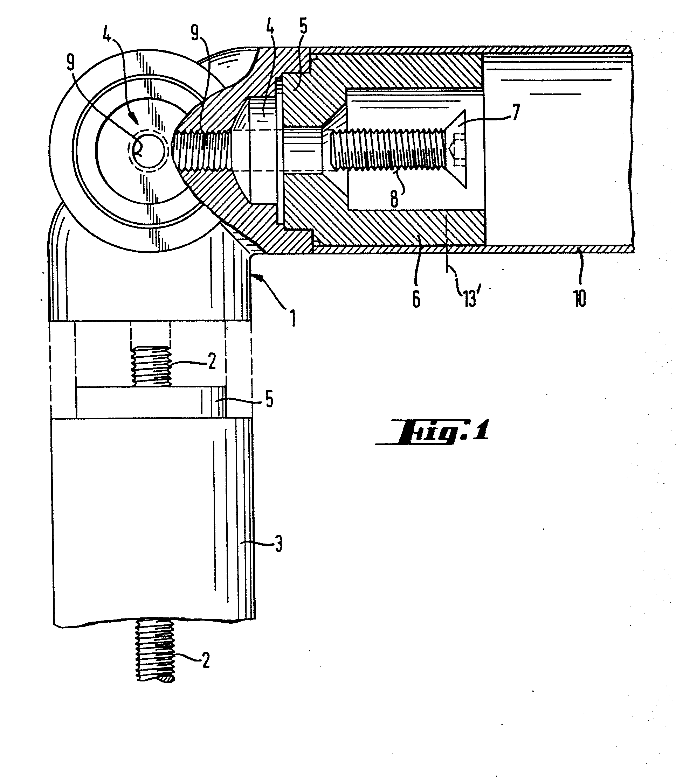

With reference now to Figs. 1 and 2 of the accompanying drawings, the device according to the present invention substantially consisting of a connecting unit 1 having a bottom threaded bore (not shown) for tightening a tie-rod 2 which passes through the leg or column 3 of the piece of furniture and is blocked by acting on the opposite lower end at the floor base of the leg or column.

The connecting unit 1 comprises also at least one, but preferably two or even three seats or cavities 4, in which heads 5 of supporting members 6 are threaded, that are fixed to said seats 4 by screws 7 whose stem 8 is screwed in the corresponding threaded bore 9 provided at the bottom of the seat 4. On the support member 6, which is now fixedly secured to unit 1, the end of the structural element 10 of the piece of furniture is then threaded, and it may be blocked on said support member 6 by a little screw or dowel 13'.

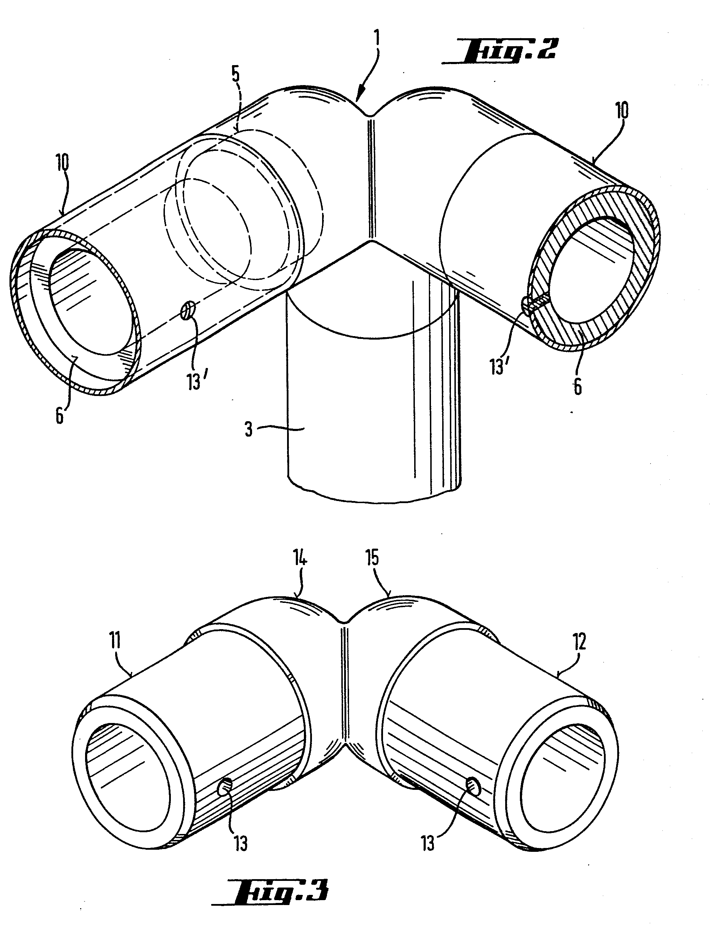

With reference now to Fig. 3 of the accompanying drawings, one may see that the second embodiment of the device of the invention consists of two tubular arms 11 and 12, on which the tubular elements (not shown) of the piece of furniture are threaded, which are then blocked by a little screw or dowel to be screwed in the threaded bore 13. Each of the tubular arms 11 and 12 has a hemispherical head cap 14 and 15 forming the merging joint portion of the device.

It is to be understood that the seat of the device will have a shape corresponding to that of the structural element to be threaded on it, which could be circular, oval, square, rectangular or any other section used for metal structural elements for furniture. It is also clear that materials and sizes may be varied according to need and demand, without departing from spirit and scope of the invention as defined in the appended claims.

0105466

1) Connection device for furniture structural elements, consisting of a single connecting unit (1) to be fixed to the legs or columns (3) of the pieces of furniture, characterized by the fact of comprising one or more seats (4) on which the ends of the furniture structural elements (10) are applied, directly or through intermediate support members (6), without needing any welding.

2) Connection device according to Claim 1, characterized by the fact that the single connecting unit (1), to be fixed to the legs or colums (3) of the pieces of furniture, has one or more seats (4) for threading intermediate support members (6) on which the ends of the furniture structural elements (10) are in turn threaded without any welding.

3) Connection device according to Claim 2, characterized by the fact that the connecting unit (1) is fixed to the furniture leg or column (3) by means of a tie-rod (2) screwed at the unit bottom and blocked by acting on its lower end at the floor base of the piece of furniture.

4) Connection device according to Claim 2, characterized by the fact that the heads (5) of the intermediate support members (6) are blocked in the corresponding seats (4) of the connecting unit (1) by means of a screw (7) whose stem (8) is screwed in a corresponding threaded bore (9) provided at the bottom of said seat (4).

5) Connection device according to Claim 2, characterized by the fact that the intermediate support member (6) has the same sectional shape of the end of the structural element (10) to be threaded on it, which is blocked by a little screw or dowel(13').

6) Connection device according to Claim 1, characterized by the fact of comprising a single piece consisting of tubular connecting arms (11, 12), on which the tubular

**0105466**

elements of the furniture structure are directly threaded and blocked, each tubular connecting arm (11, 12) having a hemispherical head cap (14, 15) forming the merging joint portion of the device.

7) Connection device according to Claim 6, characterized by the fact that the connecting arms (11, 12) have a threaded bore (13) for screwing a screw or dowel for the tubular element threaded on it.

**Fig.1**

Fig.2

Fig.3

European Patent
Office

**EUROPEAN SEARCH REPORT**

Application number

| | **DOCUMENTS CONSIDERED TO BE RELEVANT** | | EP 83109698.7 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | GB - A - 2 049 863 (ALFRED V. SCHUCKMANN) <br> * Claims; fig. * <br> -- | 1 | F 16 B 12/44 <br> F 16 B 7/00 |
| A | GB - A - 2 093 555 (VARPAJA OY) <br> * Claims; fig. * <br> -- | 1 | |
| P,A | FR - A - 2 512 892 (COMP. DES PRODUITS IND. DE L'OUEST) <br> * Claims; fig. * <br> ---- | 1 | |
| | | | TECHNICAL FIELDS SEARCHED (Int. Cl. ³) <br><br> F 16 B |

The present search report has been drawn up for all claims

| Place of search | Date of completion of the search | Examiner |
|---|---|---|
| VIENNA | 19-12-1983 | HOFBAUER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82